(19) Europäisches Patentamt
European Patent Office
Office européen des brevets

(11) EP 2 552 985 B1

(12) **EUROPEAN PATENT SPECIFICATION**

(45) Date of publication and mention of the grant of the patent:
**30.04.2014 Bulletin 2014/18**

(21) Application number: **11708965.6**

(22) Date of filing: **10.03.2011**

(51) Int Cl.:
***C08G 18/12*** (2006.01) ***C08G 18/66*** (2006.01)
***C08G 18/75*** (2006.01)

(86) International application number:
**PCT/US2011/027801**

(87) International publication number:
**WO 2011/123223 (06.10.2011 Gazette 2011/40)**

(54) **POLYURETHANE COMPOSITIONS HAVING IMPROVED IMPACT RESISTANCE AND OPTICAL PROPERTIES**

POLYURETHANZUSAMMENSETZUNG MIT ERHÖHTER SCHLAGFESTIGKEIT UND VERBESSERTEN OPTIKEIGENSCHAFTEN

COMPOSITIONS DE POLYURÉTHANE AYANT UNE RÉSISTANCE AU CHOC ET DES PROPRIÉTÉS OPTIQUES AMÉLIORÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2010 US 319286 P**

(43) Date of publication of application:
**06.02.2013 Bulletin 2013/06**

(73) Proprietor: **Dow Global Technologies LLC**
**Midland, MI 48674 (US)**

(72) Inventors:
- **BHATTACHARJEE, Debkumar**
  **Lake Jackson, TX 77566 (US)**
- **ARGYROPOULOS, John**
  **Midland, MI 48640 (US)**
- **XIE, Rui**
  **Pearland, TX 77584 (US)**
- **BREED, Dana**
  **Lake Jackson, TX 77566 (US)**
- **ANSEMS, Patricia**
  **Lake Jackson, TX 77566 (US)**
- **ZHOU, Weijun**
  **Lake Jackson, TX 77566 (US)**

(74) Representative: **Beck Greener**
**Fulwood House**
**12 Fulwood Place**
**London WC1V 6HR (GB)**

(56) References cited:
**EP-A1- 1 044 998** **EP-A1- 2 083 029**
**WO-A1-2004/041899** **US-A1- 2006 058 453**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 552 985 B1

## Description

BACKGROUND

1. Field of the Invention

The invention relates to polyurethane and related compositions. More particularly, it relates to such compositions having improved impact resistance and optical properties.

2. Background of the Art

Polymer compositions having high impact resistance and good optical properties may be useful in a number of applications, such as architectural glazings, vehicle glazings, riot shields, aircraft canopies, face masks, visors, ophthalmic and sunglass lenses, optical lenses, protective eyewear, and transparent armor. Representative optically transparent plastic materials include diethylene glycol bis(allyl carbonate), polymethylmethacrylate resins, polystyrene resins, and polycarbonate resins. However, diethylene glycol bis(allyl carbonate), polymethylmethacrylate resins and polystyrene resins may have unacceptable impact strength and crack resistance, and polycarbonate resins, while sometimes exhibiting better impact strength and crack resistance, may suffer from insufficient optical performance and poor chemical, solvent, and scratch resistance. Thus, optically transparent materials having superior impact strength and optical properties, as well as desirable levels of chemical, solvent and scratch resistance, are highly desired. In addition, low temperature flexibility and high heat distortion temperatures may also be desirable for certain applications. Currently the material to which optically transparent plastic materials are generally compared as the standard for impact resistance and optical clarity is polycarbonate.

US 2006/0058453 discloses the preparation of a polyurethane prepolymer having a %NCO of 8.27 from a mixture of 1,3 and 1,4 bis(isocyanatomethyl)cyclohexane, 91 wt% of a 2000 MW polyester and 2.7 wt% of a monofunctional 950 MW polyether. This prepolymer is then chain extended with a cycloaliphatic diamine. This polyurethane is said to be non-yellowing and transparent with a good resistance to sunlight and good weatherability and is used for coating or as a sealant material.

In WO 2004/041899 polyurethanes are described that are prepared from prepolymers based on 1,3 and 1,4 bis(isocyanatomethyl)cyclohexane and a high and low molecular weight polyol in a blend of 88 wt% 2000 MW and 12 wt% 90 MW and an %NCO of 3. These prepolymers are further chain extended resulting in a thermoplastic polyurethane that can be molded further into optical products.

SUMMARY OF THE INVENTION

In one embodiment the invention provides a thermoset polyurethane composition comprising the reaction product of at least a prepolymer and a chain extender; wherein the prepolymer has an NCO content of from 8 to 15 percent by weight and comprises the reaction product of (i) an isocyanate component including 1,4-bis(isocyanatomethyl)cyclohexane and 1,3-bis(isocyanatomethyl)cyclohexane, wherein the 1,4-bis(isocyanatomethyl)cyclohexane is present in an amount of at least 20 percent by weight of the isocyanate component; and (ii) an isocyanate-reactive component comprising (a) at least one first isocyanate-reactive compound having a molecular weight from 150 Daltons (Da) to less than 950 Da and (b) at least one second isocyanate-reactive compound having a molecular weight of from 2,000 Da to 4,500 Da; wherein the first and second isocyanate-reactive compounds each contain at least one functional group selected from a hydroxyl group, a thiol group, or an amine group, or a combination thereof; and wherein the first isocyanate-reactive compound comprises from 70 to 95 weight percent of the isocyanate-reactive component; and wherein the second isocyanate-reactive compound comprises from 5 to 30 weight percent of the isocyanate-reactive component; and wherein the chain extender is selected from one or more aromatic, aliphatic, and cycloaliphatic compounds containing at least one functional group each, the functional group being selected from a hydroxyl group, an amine group, a thiol group, or a combination thereof.

In another embodiment the invention provides a process for preparing a thermoset polyurethane composition comprising forming a prepolymer having an NCO content of from 8 to 15 percent by weight by contacting under reaction conditions: (i) an isocyanate component including 1,4-bis(isocyanatomethyl)cyclohexane and 1,3-bis(isocyanatomethyl)cyclohexane, wherein the 1,4-bis(isocyanatomethyl)cyclohexane is present in an amount of at least 20 percent by weight of the isocyanate component; and (ii) an isocyanate-reactive component comprising (a) at least one first isocyanate-reactive compound having a molecular weight from 150 Da to less than 950 Da, and (b) at least one second isocyanate-reactive compound having a molecular weight of from 2,000 Da to 4,500 Da; wherein the first and second isocyanate-reactive compounds each contain at least one functional group selected from a hydroxyl group, a thiol group; or an amine group, or a combination thereof; and wherein the first isocyanate-reactive compound comprises from 70 to

95 weight percent of the isocyanate-reactive component; and wherein the second isocyanate-reactive compound comprises from 5 to 30 weight percent of the isocyanate-reactive component; such that a prepolymer is formed; and contacting with the prepolymer under reaction conditions a chain extender selected from one or more aromatic, aliphatic, and cycloaliphatic compounds containing at least one functional group, the functional group being selected from a hydroxyl group, an amine group, a thiol group, or a combination thereof; such that a thermoset polyurethane composition is formed.

In yet another embodiment, the invention provides a thermoset polyurethane composition that is molded to form an article having at least one property selected from a total luminous transmittance, as measured according to ASTM D1003-07, of at least 90 percent; an impact resistance, as measured according to ASTM D256-06A, of at least 50 kilojoules per square meter ($kJ/m^2$); a refractive index, as measured according to ASTM D542, of at least 1.50; or an Abbé number, as calculated based on refractive index measured according to ASTM D542, of at least 25.

DETAILED DESCRIPTION OF THE EMBODIMENTS

The invention provides a polyurethane composition having, in many embodiments, excellent optical clarity and impact performance, as well as other desirable properties, including but not limited to high refractive index, low density, increased maximum service temperature, desirable levels of chemical, solvent and scratch resistance, and combinations thereof.

It is well known in the art that polyurethane compositions may be prepared by reacting an isocyanate component, which is a material having terminal isocyanate (-N=C=O, also referred to as NCO) groups, with a component containing terminal hydroxyl (-OH) groups, forming the urethane linkage (-RNHCOOR'-). As used herein, the word "terminal" refers to atomic groups that are located at places in a molecule at which they are able to form covalent bonds with other molecules under suitable reaction conditions, alternatively referred to as "functional" or "reactive" groups. It is also known that, where the terminal isocyanate-reactive groups are, instead, amine (-NH) groups, the result of their reaction with an isocyanate group is a urea linkage (-RNH-CO-HNR--) and the product is a polyurea. It is also well known that, where the terminal isocyanate-reative groups are, instead, thiol (-SH) groups, the result of their reaction with an isocyanate group is a sulfur-containing urethane. If a combination of terminal isocyanate-reactive groups is employed, whether on a single compound or by employing more than one type of compound, including both hydroxyl and amine groups, the result is a polyurethane-urea. Thus, as the term is used herein, "polyurethane composition" is defined to include both true polyurethanes and also polyurethane-urea, sulfur-containing urethane, and polyurea compositions, wherein such are thermoset materials.

The compositions of the invention include an isocyanate component that contains both 1,4-bis(isocyanatomethyl)cyclohexane and 1,3-bis(isocyanatomethyl)cyclohexane. In certain embodiments the isocyanate component includes from 20 to less than 100 weight percent, based on total isocyanate component, of 1,4-bis(isocyanatomethyl)cyclohexane and from greater than 0 to 80 weight percent of 1,3-bis(isocyanatomethyl)cyclohexane. In preferred embodiments the isocyanate component includes from 40 to less than 100 weight percent, based on total isocyanate component, of 1,4-bis(isocyanatomethyl)cyclohexane and from greater than 0 to 60 weight percent of 1,3-bis(isocyanatomethyl)cyclohexane. Proportionately, in certain embodiments the ratio of 1,4-bis(isocyanatomethyl)cyclohexane to 1,3-bis(isocyanatomethyl)cyclohexane may range from 99:1 to 20:80, and in certain particularly desirable embodiments may range from 99:1 to 40:60. In preferred embodiments the combined 1,4-bis(isocyanatomethyl)cyclohexane and 1,3-bis(isocyanatomethyl)cyclohexane isomers make up at least 70 percent by weight of the total isocyanate component. In other embodiments the combined 1,4-bis(isocyanatomethyl)cyclohexane and 1,3-bis(isocyanatomethyl)cyclohexane isomers comprise at least 75, 80, 85 or 90 weight percent of the total isocyanate component. In a further embodiment the combination comprises the entire isocyanate component. It is also desirable that the isocyanate component as a whole has a (weight average) molecular weight ranging from 100 Da to 2,000 Da, preferably from 150 Da to 1,000 Da:

Where the combination of 1,4-bis(isocyanatomethyl)cyclohexane and 1,3-bis-(iso-cyanatomethyl)cyclohexane is less than 100 percent by weight of the total isocyanate component, the remainder may be selected from a wide variety of auxiliary isocyanates group-containing compounds. Such may include, for example, organic polyisocyanate that are aliphatic, cycloaliphatic, araliphatic, aromatic, or a combination thereof, including methane diphenyl diisocyanates (MDIs), toluene diisocyanates (TDIs), naphthylene diisocyanates (NDI), 3,3-bitoluene diisocyanate (TODI), para-phenylene diisocyanate (PPDI), polymeric MDIs (PMDIs), hexamethylene diisocyanate (HDI), methylene bis(p-cyclohexyl isocyanate) ($H_{12}MDI$), cyclohexyl diisocyanate(CHDI), isophorone diisocyanate (IPDI), meta-tetramethylxylylene diisocyanate (meta-TMXDI), and combinations thereof.

For example, auxiliary selections may include alkylene diisocyanates, particularly those having from 4 to 12 carbon atoms in the alkylene moiety, such as 1,12-dodecane diisocyanate, 2-ethyltetramethylene 1,4-diisocyanate, 2-methylpentamethylene 1,5-diisocyanate, 2-ethyl-2-butylpentamethylene 1,5-diisocyanate, tetramethylene 1,4-diisocyanate and preferably hexamethylene 1,6-diisocyanate; cycloaliphatic diisocyanates, such as cyclohexane 1,3- and 1,4-diisocyanate and any desired mixture of these isomers, 1-isocyanato-3,3,5-trimethyl-5-isocyanato-methylcyclohexane (isophorone diisocyanate), 2,4- and 2,6-hexahydrotolylene diisocyanate, and the corresponding isomer mixtures, 4,4-,

2,2'- and 2,4'-dicyclohexylmethane diisocyanate and the corresponding isomer mixtures, araliphatic diisocyanates, e.g., 1,4-xylylene diisocyanate and xylylene diisocyanate isomer mixtures, and preferably aromatic diisocyanates and polyisocyanates, e.g., 2,4- and 2,6-tolylene diisocyanate and the corresponding isomer mixtures, 4,4'-, 2,4'- and 2,2'-diphenylmethane diisocyanate and the corresponding isomer mixtures, mixtures of 4,4'- and 2,4'-diphenylmethane diisocyanates, polyphenyl-polymethylene polyisocyanates, mixtures of 4,4'-, 2,4'- and 2,2'-diphenylmethane diisocyanates and polyphenyl-polymethylene polyisocyanates (crude MDI), and mixtures of crude MDI and tolylene diisocyanates. The organic diisocyanates and polyisocyanates may be employed individually or in the form of combinations thereof.

The organic polyisocyanates may be prepared by known processes. They are preferably prepared by phosgenation of the corresponding polyamines with formation of polycarbamoyl chlorides. The polycarbamoyl chlorides may then be subjected to thermolysis to give the organic polyisocyanate and hydrogen chloride. The organic polyisocyanates may alternatively be prepared by phosgene-free processes, such as for example by reacting the corresponding polyamines with urea and alcohol to give polycarbamates. The polycarbamates may then be subjected to thermolysis to give the polyisocyanate and alcohol.

Modified polyisocyanates may also be used, that is, products which are obtained by chemical reaction of organic diisocyanates and/or polyisocyanates. Specific examples are ester-, urea-, biuret-, allophanate-, uretoneimine-, carbodiimide-, isocyanurate-, uretidione- and/or urethane-containing diisocyanates and/or polyisocyanates. Individual examples are urethane-containing organic, preferably aliphatic or cycloaliphatic polyisocyanates containing from 15 to 50 percent by weight, preferably from 21 to 31 percent by weight, of NCO, based on the total weight. Examples include hexamethylene 1,6-diisocyanate, cyclohexane 1,3- and 1,4-diisocyanate, isophorone diisocyanate, 4,4-, 2,2'- and 2,4'-dicyclohexylmethane diisocyanate, and 1,4-xylylene diisocyanate, in each case modified by means of formation of allophanate, biuret, isocyanurate or uretidione.

The second major component of the inventive formulation is an isocyanate-reactive component. This component includes at least two compounds. The first isocyanate-reactive compound is a low molecular weight compound, having a molecular weight that ranges from 150 Da to less than 950 Da, and the second isocyanate-reactive compound is a higher molecular weight compound, having a molecular weight that ranges from 2,000 Da to 4,500 Da. In the invention the isocyanate-reactive component as a whole includes from 70 to 95 percent by weight of the first, low molecular weight isocyanate-reactive compound, and from 5 to 30 percent by weight of the second, high molecular weight isocyanate-reactive compound. Percentage is based on the weight of the total isocyanate-reactive component. Each of these compounds contains, by definition, terminal groups that react with isocyanate groups, including hydroxyl groups, amine groups, thiol groups, or a combination thereof (depending upon whether it is desired to prepare a polyurethane, a sulfur-containing polyurethane, a polyurea, or a polyurethane-urea), and thus may include polyols, thiols and/or polyamines, as well as hybrid species containing both hydroxyl and amine functionalities, or both hydroxyl and thiol functionalities, or both thiol and amine functionalities. The combination of the at least two polyols, polyamines, thiols, or hybrids thereof, required in the isocyanate-reactive component, is frequently termed, for convenience as well as convention, as the "polyol," regardless of whether a formulation contains only the two isocyanate-reactive compounds specified in this component, or also includes additional compounds that are isocyanate-reactive and which may fall outside of the molecular weight range limitations.

In certain embodiments the isocyanate-reactive component as a whole has an average functionality of from 1.5 to 4, preferably at least 2, and more preferably from 2 to 3. It is important to note that isocyanate-reactive compounds having a wide range of molecular weights and other characteristics may be included in the isocyanate-reactive component as a whole, provided that at least one compound has the specified molecular weight ranging from 150 Da to less than 950 Da, and that at least one compound has the specified molecular weight ranging from 2,000 Da to 4,500 Da. However, it is also preferred that at least 50 percent, more preferably from 70 percent to 95 percent, of the total isocyanate-reactive component has an average molecular weight within the 150 Da to less than 950 Da range, and that at least 3 percent, more preferably from 5 to 30 percent, of the total isocyanate-reactive component has an average molecular weight ranging from 2,000 Da to 4,500 Da.

The isocyanate-reactive component is employed in an amount such that the equivalents ratio, i.e., the ratio of terminal isocyanate groups to terminal hydroxyl, thiol, and/or amine groups, whether such are present in a single compound or in more than one compound, may in certain embodiments range from preferably 1.5:1 to 4.0:1, more preferably from 1.8:1 1 to 3.5:1, and most preferably from 2.0:1 1 to 3.0:1.

The isocyanate-reactive component may include a wide variety of types of compounds, including, for example, alcohols, such as diols including cyclobutanediol; polyester glycols; polycaprolactone glycols; polyether glycols; polycarbonate glycols; and copolymers thereof, including for example copolymer polyols of polycaprolactone and poly(oxytetramethylene)glycol, and copolymer polyols of polycarbonate and polycaprolactone. For example, a copolymer polyol of polycaprolactone and polytetramethylene ether glycol (PTMEG) is available under the tradename of CAPA™ 7201, and a copolymer polyol of polycarbonate and polycaprolactone is available under the tradename of CAPA™ 7203, both from Perstorp Group. Combinations of any of the above polyols may also be employed.

In certain embodiments, the alcohols may be particularly useful as isocyanate-reactive compounds. Cyclobutanediol, in particular, may offer an improvement in the optical properties, that is, in the refractive index, of the final composition. This may be noted particularly where it is employed in an amount of at least 3 percent by weight, and preferably at least 15 percent by weight, based on the total isocyanate-reactive component.

Polyester polyols that may be suitable for inclusion in the isocyanate-reactive component may be prepared from, for example, organic dicarboxylic acids having from 2 to 12 carbon atoms, preferably aliphatic dicarboxylic acids having from 4 to 10 carbon atoms and polyhydric alcohols, preferably diols having from 2 to 12 carbon atoms, preferably from 2 to 6 carbon atoms. Examples of suitable dicarboxylic acids are succinic acid, glutaric acid, adipic acid, suberic acid, azelaic acid, sebacic acid, decane-dicarboxylic acid, maleic acid, fumaric acid, and preferably phthalic acid, isophthalic acid, terephthalic acid and the isomeric naphthalene-dicarboxylic acids. The dicarboxylic acids may be used either individually or mixed with one another. The free dicarboxylic acids may also be replaced by the corresponding dicarboxylic acid derivatives, for example, dicarboxylic esters of alcohols that have from 1 to 4 carbon atoms or dicarboxylic anhydrides. Examples of suitable dihydric and polyhydric alcohols for preparing the dicarboxylic esters are ethanediol, diethylene glycol, 1,2- and 1,3-propanediol, dipropylene glycol, 1,4-butanediol, 1,5-pentanediol, 1,6-hexanediol, 1,10-decanediol, glycerol, trimethylolpropane and combinations thereof. Preference is given to ethanediol, diethylene glycol, 1,4-butanediol, 1,5-pentanediol, 1,6-hexanediol, and combinations thereof, in particular mixtures of 1,4-butanediol, 1,5-pentanediol and 1,6-hexanediol. Furthermore, polyester-polyols made from lactones, e.g., ε-caprolactone or hydroxycarboxylic acids, e.g., ω-hydroxycaproic acid and hydrobenzoic acid, may also be employed. Preferred polycaprolactone glycols may include the reaction products of ε-caprolactone with one or more of the low molecular weight glycols listed hereinabove.

The preferred polyester and polycaprolactone polyols may be derived by well known esterification or transesterification procedures, as described, for example, in Ulrich, H. "Urethane Polymers," Kirk-Othmer Encyclopedia of Chemical Technology (John Wiley & Sons, Inc., 2006), and Gagnon, "Polyethers, Propylene Oxide Polymers," Kirk-Othmer Encyclopedia of Chemical Technology (John Wiley & Sons, Inc., 1996).

One group of readily available polyhydroxyl compounds, also suitable for inclusion in the isocyanate-reactive component, is the polyether polyols. In certain embodiments these may have a functionality of from 1.5 to 6, in particular from 2 to 3. They may be prepared by known processes, for example, as described in Pruckmayr, G., et al., "Polyethers, Tetrahydrofuran and Oxetane Polymers," Kirk-Othmer Encyclopedia of Chemical Technology (John Wiley & Sons, Inc., 1996). The most preferred polyether polyols are polytetramethylene glycol, polypropylene glycol, and ethylene oxide end-capped propylene glycol. In general preparation methods may include, for example, anionic polymerization using alkali metal hydroxides, such as sodium hydroxide or potassium hydroxide, or alkali metal alkoxides, such as sodium methoxide, sodium ethoxide, potassium ethoxide or potassium isopropoxide, as catalysts and with the addition of at least one initiator molecule containing from 2 to 6, preferably 2 to 3, reactive hydrogen atoms in bound form. Another preparation method is cationic polymerization using Lewis acids, such as antimony pentachloride, boron fluoride etherate, or bleaching earth, as catalysts, beginning with one or more alkylene oxides having from 2 to 4 carbon atoms in the alkylene moiety.

Examples of suitable alkylene oxides are 1,3-propylene oxide, 1,2- and 2,3-butylene oxide, styrene oxide and, preferably, tetrahydrofuran, ethylene oxide and 1,2-propylene oxide. The alkylene oxides may be used individually, alternatively one after the other, or as mixtures. Examples of suitable initiator molecules may include water, organic dicarboxylic acids such as succinic acid, adipic acid, phthalic acid and terephthalic acid, and a variety of amines, including but not limited to aliphatic and aromatic, unsubstituted or N-mono-, N,N- and N,N'-dialkyl-substituted diamines having from 1 to 4 carbon atoms in the alkyl moiety, such as unsubstituted or mono- or dialkyl-substituted ethylenediamine, diethylenetriamine, triethylenetetramine, 1,3-propylenediamine, 1,3- and 1,4-butylene diamine, 1,2-, 1,3-, 1,4-, 1,5- and 1,6-hexamethyl-enediamine, aniline, phenylenediamines, 2,3-, 2,4-, 3,4- and 2,6-tolylenediamine, 4,4'-, 2,4'- and 2,2'-diaminodiphenylmethane, and combinations thereof.

Other suitable initiator molecules may include alkanolamines, for example, ethanolamine, N-methyl- and N-ethylethanolamine; dialkanolamines, for example, diethanol-amine, N-methyl- and N-ethyldiethanolamine; trialkanolamines, for example, triethanolamine; ammonia; and polyhydric alcohols, in particular dihydric and/or trihydric alcohols, such as ethanediol, 1,2- and 1,3-propanediol, diethylene glycol, dipropylene glycol, 1,4-butanediol, cyclobutanediol, 1,6-hexanediol, glycerol, trimethylolpropane, pentaerythritol, sorbitol, sucrose, polyhydric phenols, for example, 4,4'-dihydroxydiphenylmethane and 4,4'-dihydroxy-2,2-diphenylpropane, resols, for example, oligomeric products of the condensation of phenol and formaldehyde, Mannich condensates of phenols, formaldehyde and dialkanolamines, and melamine.

It is advantageous in some embodiments that the polyols included in the isocyanate-reactive component are polyether polyols having a functionality of from 2 to 6, preferably 2 to 3, prepared by anionic polyaddition of at least one alkylene oxide, preferably ethylene oxide, 1,2-propylene oxide, 1,2-propylene oxide and ethylene oxide, or tetrahydrofuran, onto, as an initiator molecule, at least one aromatic compound containing at least two reactive hydrogen atoms of which at least one is included as part of a hydroxyl, amino or carboxyl group. Examples of such initiator molecules may include aromatic polycarboxylic acids, for example, hemimellitic acid, trimellitic acid, trimesic acid and, preferably,

phthalic acid, isophthalic acid and terephthalic acid, or mixtures of at least two of the aforesaid polycarboxylic acids; hydroxycarboxylic acids, for example, salicylic acid, p- and m-hydroxybenzoic acid and gallic acid; aminocarboxylic acids, for example, anthranilic acid, and m- and p-aminobenzoic acid; polyphenols, for example, resorcinol; and, preferably, dihydroxydiphenylmethane, and dihydroxy-2,2-diphenylpropanes, Mannich condensates of phenols, formaldehyde and dialkanolamines, preferably diethanolamine; and aromatic polyamines, for example, 1,2-, 1,3- and 1,4-phenylenediamine, 2,3-, 2,4-, 3,4- and 2,6-tolylenediamine, 4,4'-, 2,4'- and 2,2'-diaminodiphenylmethane, polyphenylpolymethylene-polyamines, mixtures of diaminodiphenylmethanes and polyphenylpolymethylenepolyamines, as formed, for example, by condensation of aniline with formaldehyde, and combinations of at least two of the aforesaid polyamines.

The preparation of polyether polyols using an at least difunctional aromatic initiator molecules of this type is known and described in, for example, DD-A-290 201; DD-A-290 202; DE-A-34 12 082; DE-A-4 232 970; and GB-A-2,187,449.

Both polyether polyols and polyester polyols may be employed, and also the hybrid compounds referred to as polyether-ester polyols. Such may be used individually or in the form of mixtures. Furthermore, they may be used in combination with the graft polyether polyols and/or polyester polyols and the hydroxyl-containing polyester-amides, polyacetals, polycarbonates and/or phenolic polyols. Also useful are polythioether polyols, polycaprolactones, polycarbonates, polyether amines, polyester amines, polycarbonate amines, polycaprolactone amines, copolymers thereof, and combinations thereof.

Examples of suitable hydroxyl-containing polyacetals are the compounds that may be prepared from glycols, such as diethylene glycol, triethylene glycol, 4,4'-dihydroxyeth-oxydiphenyldimethylmethane, hexanediol and formaldehyde. Suitable polyacetals may also be prepared by polymerizing cyclic acetals.

Suitable hydroxyl-containing polycarbonates are those aliphatic polycarbonate glycols that may be prepared, for example, by reacting diols, such as 1,3-propanediol, 1,4-butanediol, 1,6-hexanediol, diethylene glycol, triethylene glycol or tetraethylene glycol, with diethyl carbonate or dimethyl carbonate.

The polyester-amides include, for example, the predominantly linear condensates obtained from polybasic, saturated and/or unsaturated carboxylic acids or anhydrides thereof with polyhydric, saturated and/or unsaturated amino alcohols, or with mixtures of polyhydric alcohols and amino alcohols and/or polyamines.

Suitable compounds containing at least two reactive hydrogen atoms may further include phenolic and halogenated phenolic polyols, for example, resol-polyols containing benzyl ether groups. Resol-polyols of this type may be prepared, for example, from phenol, formaldehyde, expediently paraformaldehyde, and polyhydric aliphatic alcohols. Such are described in, for example, EP-A-0 116 308 and EP-A-0 116 310.

In certain preferred embodiments, the isocyanate-reactive component may include a mixture of polyether polyols containing at least one polyether polyol based on an aromatic, polyfunctional initiator molecule and at least one polyether polyol based on a non-aromatic initiator molecule, preferably a dihydric to octahydric alcohol.

Suitable aliphatic thiol compounds may also be included in the isocyanate-reactive component. Such may contain 0 or more hydroxyl groups and 1 or more thiol groups (alternatively termed mercapto groups), and may be exemplified by monothioglycerol, dithioglycerol, trithioglycerol, dimercaptopropanol, 1-mercaptomethyl-1,1-dihydroxymethyl-propane, 1,4-dimercapto-2,3-hydroxybutane, tetrakis(mercaptomethyl)methane, 1,1, 1-tris(mer-captomethyl)ethane, 1,1,1-tris(mercaptomethyl)propane, 2,5-dimercaptomethyl-1,4-dithiane, 2,5-dimercaptomethyl-2,5-dimethyl-1,4-dithiane, 2,5-dimercaptothiophen, 2,5-dimercaptomethylthio-phen, di(2-hydroxy-ethyl)disulfide, polyether polysulfide and polyester polysulfide. These compounds may be used singly or in combination. Of these, use of any of the thiol-group containing compounds in the isocyanate-reactive component may be particularly useful in improving the optical properties, particularly the refractive index, of the composition, and is desirable in certain embodiments in an amount of at least 3 percent, and preferably at least 15 percent. However, there may be a tendency of some of these thiol compounds to form crystals or be otherwise unstable with non-sulfur-containing isocyanate-reactive compounds, and thus such should be selected with care.

Suitable polyamines for this invention include any amine-terminated compound available to those practicing in the industry. The amine-terminated compound may include amine-terminated hydrocarbons, amine-terminated polyethers, amine-terminated polyesters, amine-terminated polycarbonates (also termed polycarbonate amines), amine-terminated polycaprolactones (also termed polycaprolactone amines), and copolymers and combinations thereof. The amine-terminated segments may be in the form of a primary amine ($NH_2$) or a secondary amine (NHR). The molecular weight of the amine-terminated compounds that may be used in the invention may range from 100 to 5,000, with functionality of 1.5 to 4, preferably 2 to 3. In one embodiment, the amine-terminated compound has a molecular weight greater than or equal to 400. In other embodiments the amine-terminated compound's molecular weight may be greater than or equal to 1,000, and preferably greater than or equal to 2,000

The amine-terminated compound may include, for example, amine-terminated polyethers (also termed polyether amines) having any of the following generic structures:

$$H_2N-(C_nH_{2n}O)_x-C_nH_{2n}-NH_2;$$

$$H_2N-(C_nH_{2n}O)_x-C_nH_{2n}-NHR;\ \text{or}$$

$$RHN-(C_nH_{2n}O)_x-C_nH_{2n}-NHR$$

wherein x is the chain length, i.e., an integer of 1 or greater, preferably 1 to 25; n is preferably 1 to 12; and R is any alkyl group having from 1 to 20 carbon atoms, preferably from 1 to 12 carbon atoms, a phenyl group, a cyclic group, or a combination thereof. One example of an amine-terminated polyether is a polyether amine. As used herein, "polyether amine" refers to a polyoxyalkyleneamine containing primary amino groups attached to the terminus of a polyether backbone. Due to the rapid reaction of isocyanate and amine, and the insolubility of many urea products, however, the selection of diamines and polyether amines is desirably limited to those allowing the successful formation of a polyurea prepolymer.

In one embodiment, the polyether backbone may be based on tetramethylene, propylene, ethylene, trimethylolpropane, glycerin, and mixtures thereof. In that embodiment, the polyether amine may have either of the following generic structures:

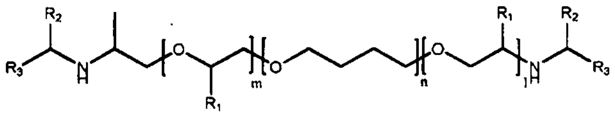

or

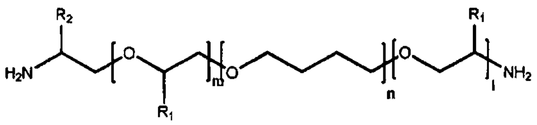

wherein each of the repeating units m, n, and l has a value ranging from 1 to 70, preferably from 5 to 50, and more preferably from 12 to 35; $R_1$ and $R_2$ are each independently an alkyl group having from 1 to 20 carbon atoms, preferably from 1 to 12 carbon atoms, a phenyl group, a cyclic group, or a combination thereof; and $R_3$ is a hydrogen, methyl group, or a combination thereof.

In another embodiment, the polyether amine has one of the following generic structures:

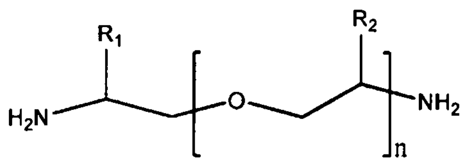

or

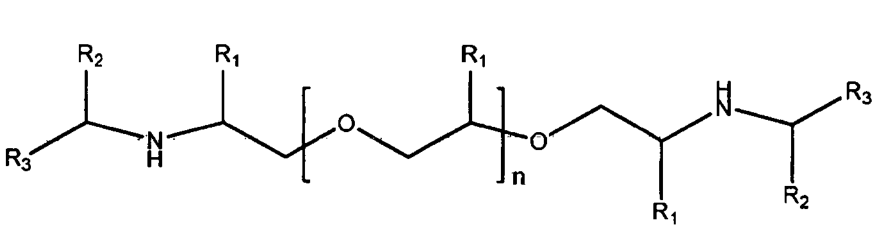

wherein the repeating unit n, $R_1$, $R_2$ and $R_3$ are all as defined previously hereinabove.

Suitable polyether amines include, but are not limited to, methyldiethanolamine; polyoxyalkylenediamines such as, polytetramethylene ether diamines, polyoxypropylenetriamine, polyoxyethylenediamines, and polyoxypropylenediamines; poly(ethylene oxide-capped oxypropyl-ene)ether diamines; propylene oxide-based triamines; triethyleneglycoldiamines; trimethylol-propane-based triamines; glycerin-based triamines; and combinations thereof. In one embodiment, the polyether amine may be JEFFAMINE™ SD2001, JEFFAMINE™ XTJ 605, JEFFAMINE™ XTJ 604, JEFFAMINE™ XTJ 605 (JEFFAMINE™ is a tradename of Huntsman Corporation).

In addition, the amine-terminated compound may include amine-terminated polyesters (also termed polyester amines) having any of the following generic structures:

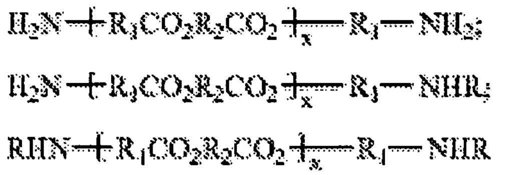
or

wherein x is the chain length, i.e., 1 or greater, preferably from 1 to 20; R is any alkyl group having from 1 to 20 carbon atoms, preferably 1 to 12 carbon atoms, a phenyl group, a cyclic group, or a combination thereof; and $R_1$ and $R_2$ are straight or branched hydrocarbon chains, for example, alkyl or aryl chains.

Copolymers of polycaprolactone and polyamines may also be used in the present invention. These copolymers include, but are not limited to, bis(2-aminoethyl)ether initiated polycaprolactone, 2-(2-aminoethylamino)ethanol, 2-2(aminoethylamino)ethanol, polyoxyethylene diamine initiated polycaprolactone, propylene diamine initiated polycaprolactone, polyoxy-propylene diamine initiated polycaprolactone, 1,4-butanediamine initiated polycaprolactone, trimethylol-propane-based triamine initiated polycaprolactone, neopentyl diamine initiated polycaprolactone, hexanediamine initiated polycaprolactone, polytetramethylene ether diamine initiated polycaprolactone, and mixtures thereof. In addition, polycaprolactone polyamines having the following structures may be useful:

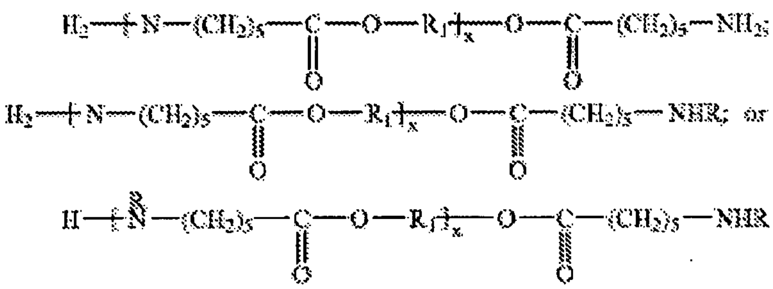
or

wherein x is the chain length, i.e., an integer of 1 or greater, preferably 1 to 25; R is an alkyl group having from 1 to 20 carbons, preferably from 1 to 12 carbons, a phenyl group, or a cyclic group; and $R_1$ is a straight or branched hydrocarbon chain including from 1 to 20 carbons.

In another embodiment, the amine-terminated compound may be an amine-terminated polycarbonate (also termed polycarbonate amine) having any of the following generic structures:

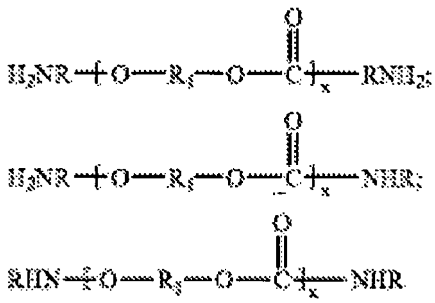
or

wherein x is the chain length, i.e., an integer of 1 or greater, preferably 1 to 25; R is an alkyl group having from 1 to 20 carbons, preferably 1 to 12 carbons, a phenyl group, or a cyclic group; and $R_1$ is a straight chain hydrocarbon or predominantly bisphenol A group or a derivative thereof.

In another embodiment, the amine compound includes a poly(1,4-butanediol)bis(4-aminobenzoate) having one of the following structures:

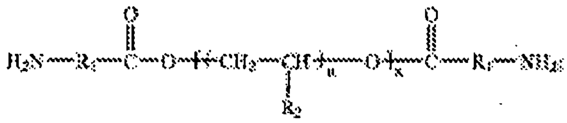

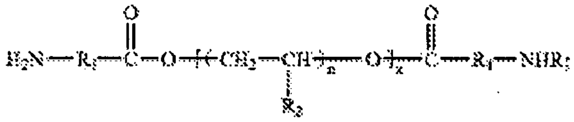 or

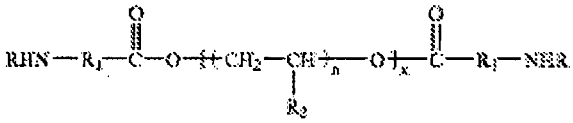

wherein x and n are chain lengths, i.e., independently integers of 1 or greater, and n is preferably from 1 to 12; R and $R_1$ are linear or branched hydrocarbon chains, an alkyl group having from 1 to 20 carbons, preferably from 1 to 12 carbons, a phenyl group, a cyclic group, or a combination thereof; and $R_2$ is a hydrogen, a methyl group, or a combination thereof. In one embodiment, $R_1$ is phenyl, $R_2$ is hydrogen, and n is 2.

Again, it is important to note that the two molecular weight requirements (150 to less than 950 Da, and 2,000 to 4,500 Da) must be met by at least one compound for each, and further, that it is preferable that at least 50 percent, and more preferably from 70 percent to 95 percent by weight, based on the total isocyanate-component, has an average molecular weight within the range of 150 Da to less than 950 Da, and at least 3 percent, and more preferably from 5 percent to 30 percent by weight, based on the total isocyanate-reactive component, has an average molecular weight within the range of 2,000 Da to 4,500 Da.

In addition to the isocyanate component and isocyanate-reactive component as discussed previously, the formulation includes a chain extender. It may also include a crosslink agent, but such is optional. However, because many of the selections for chain extender are the same as selections for crosslink agents, and because some compounds may serve both purposes, such will be addressed herein concurrently. Chain extenders are used to connect lower molecular weight polyurethane chains in order to form higher molecular weight polyurethane chains, and are generally grouped as having a functionality equal to 2. Crosslink agents serve to promote or regulate intermolecular covalent or ionic bonding between polymer chains, linking them together to create a more rigid structure. The crosslink agents are generally grouped as having a functionality equal to 3 or more. Neither chain extenders nor crosslink agents are generally considered to be polymers in their own right. Both of these groups are usually represented by relatively short chain, low molecular weight (less than 150 Da) molecules with reactive hydroxyl, thiol and/or amine functionalities. Of these, it is necessary to include in the formulation at least one chain extender which is an aliphatic, cycloaliphatic, or aromatic compound, which by definition will have a molecular weight less than 150 Da. Where a crosslink agent is also selected, or where a compound is to serve both purposes, the same selection of low molecular weight (less than 150 Da) aliphatic, cycloaliphatic and aromatic compounds is preferred therefor also. In amount the chain extender is desirably employed such that the ratio of the - NCO groups in the prepolymer to the isocyanate-reactive groups in the chain extender falls within the range of 0.9:1 to 1.1:1, and more desirably from 0.95:1 to 1.05:1.

Preferred chain extenders and crosslink agents may include, but are not limited to, amines such as diethyltoluenediamine (DETDA), dimethylthiotoluenediamine (ETHACURE™ 300), 4,4'-methylene-bis(2-chloroaniline) (MBCA), 4,4'-methylene-bis(3-chloro-2,6-diethylaniline) (MCDEA), tertiary butyl toluene diamine (TBTDA), trimethylene glycol di-p-amino-benzoate (VERALINK™ 740M), 4,4'-bis(sec-butylamino)diphenylmethane (UNILINK™ 4200), 4,4'-bis-(sec-butylamino)-dicyclohexylmethane (CLEARLINK™ 1000), N,N'-diisopropylisophorone diamine, available from Huntsman Corporation under the tradename JEFFLINK™, and combinations thereof.

In one embodiment an alkylated aromatic diamine, preferably an alkylated toluene diamine (alkylated TDA) or alkylated methylene dianiline (alkylated MDA) may be used as the chain extender. Preferably the alkyl groups of these aromatic diamines have from 1 to 20 carbon atoms, more preferably from 1 to 6 carbon atoms.

For example, the alkylated TDA may be a mixture of 3,5-diethyl-2,4-toluenediamine and 3,5-diethyl-2,6-toluenediamine (DETDA). Particularly useful is ETHACURE™ 100LC, a low color version available from Albemarle, Inc. Other suitable alkylated aromatic diamines may include those listed in U.S. Patent No. 4, 631,298, which is incorporated herein by reference in its entirety. These include 2,4,6-triethyl-m-phenylenediamine (TEMPDA); 3,5-diisopropyl-2,4-diaminotoluene; 3,5-di-sec-butyl-2,6-diaminotoluene; 3-ethyl-5-isopropyl-2,4-diaminotoluene; 4,6-diisopropyl-m-phenylenediamine; 4,6-di-tert-butyl-m-phenylenediamine; 4,6-diethyl-m-phenylene-diamine; 3-isopropyl-2,6-diaminotoluene; 5-isopropyl-2,4-diaminotoluene; 4-isopropyl-6-methyl-m-phenylenediamine; 4-isopropyl-6-tert-butyl-m-phenylenediamine; 4-ethyl-6-isopropyl-m-phenyl-enediamine; 4-methyl-6-tert-butyl-m-phenylenediamine; 4,6-di-sec-butyl-m-phenylenediamine; 4-ethyl-6-tert-butyl-m-phenylenediamine; 4-ethyl-6-sec-butyl-m-phenylenediamine; 4-ethyl-6-isobutyl-m-phenylenediamine; 4-isopropyl-6-isobutyl-m-phenylenediamine; 4-isopropyl-6-sec-butyl-m-phenylenediamine; 4-tert-butyl-6-isobutyl-m-phenylenediamine; 4-cyclo-pentyl-6-ethyl-m-phenylenediamine; 4-cyclohexyl-6-isopropyl-m-phenylenediamine; 4,6-dicyclopentyl-m-phenyl-enediamine; 2,2',6,6'-tetraethyl-4,4'-methylenebisaniline; 2,2',6,6'-tetraisopropyl-4,4'-methylene-bisaniline, methylenebis(diisopropylaniline); 2,2',6,6'-tetra-sec-butyl-4,4'-methylenebisaniline; 2,2'-dimethyl-6,6'-di-tert-butyl-4,4'-methylenebisaniline; 2,2'-di-tert-butyl-4,4'-methylenebisaniline; and 2-isopropyl-2',6'-diethyl-4,4'-methylenebisaniline.

Common chain extenders and crosslink agents with hydroxyl groups include, for example, hydroquinone di(β-hydroxyethyl)ether, resorcinol di(beta-hydroxyethyl) ether, resorcinol di(beta-hydroxypropyl) ether, glycerine, ethylene glycol (EG), diethylene glycol (DEG), triethylene glycol, tetraethylene glycol, propylene glycol, dipropylene glycol, tripropylene glycol, 1,3-propanediol, 1,3-butanediol, 1,4-butanediol (BDO), 1,4-dithiane-2,5-diol, 3,6-dithia-1,8-octanediol, neopentyl glycol, 1,6-hexanediol, 1,4-cyclohexanedimethanol, ethanolamine, diethanolamine, methyldiethanolamine, phenyldiethanolamine, trimethylolpropane (TMP), 1,2,6-hexanetriol, triethanolamine, pentaerythritol, N,N,N',N'-tetrakis(2-hydroxypropyl)ethylenediamine, and combinations thereof. Particularly frequently used are 1,4-butanediol (BDO), diethylene glycol (DEG), glycerine, trimethylolpropane (TMP), hydroquinone di(β-hydroxyethyl)ether, and combinations thereof. Particularly frequently used are 1,4-butanediol (BDO), diethylene glycol (DEG), glycerine, trimethylolpropane (TMP), and combinations thereof.

In certain particular embodiments, it has been found that use of an aromatic diamine, in an amount of at least 20 percent by weight, based on the weight of the isocyanate-reactive component, as a chain extender, may be particularly effective, in combination with a hydroxyl-terminated isocyanate-reactive component, at improving optical properties such that a refractive index of at least 1.50, desirably at least 1.53, is attained. Such a refractive index may enable use of the inventive compositions to prepare ophthalmic lenses, including those used in eyeglasses. Particularly preferred aromatic diamines include 4,4-methylene-bis(3-chloro-2,6-diethylaniline) (e.g., LONZACURE™ M-CDEA, available from Air Products and Chemicals, Inc.), 2,4-diamino-3,5-diethyltoluene, 2,6-diamino-3,5-diethyltoluene, and combinations thereof (collectively termed "diethylthiotoluenediamine" (DMTDA), commercially available from Albemarle Corporation under the tradename ETHACURE™ 300); and 4,4'-methylene-bis-(2-chloroaniline), commercially available from Kingyorker Chemicals under the tradename MOCA™.

In addition to hydroxyl and amine functionalities, thiols can be used singly or in combination with hydroxyl and amine functionalities as chain extenders or crosslink agents. Thiols particularly useful for this invention may include, but are not limited to, monothioglycerol, dithioglycerol, trithioglycerol, dimercaptopropanol, 1-mercaptomethyl-1,1-dihydroxymethyl-propane, 1,4-dithioerythritol, 3,7-dithia-1,9-nonanedithiol, 1,4-dimercapto-2,3-hydroxybutane, tetrakis(mercaptomethyl)methane, 1,1,1-tris(mercaptomethyl)ethane, 1,1, 1-tris(mercaptomethyl)-propane, 2,5-dimercaptomethyl-1,4-dithiane, 2,5-dimercaptomethyl-2,5-dimethyl-1,4-dithiane, 2,5-dimercaptothiophen, 2,5-dimercaptomethylthiophen, di(2-hydroxyethyl)disulfide, and combinations thereof. As is the case for the aromatic diamines, the thiols may, as a group, be particularly useful as chain extenders where refractive indices of at least 1.50 are sought, particularly for uses such as production of ophthalmic lenses. Therefore it is desirable in certain embodiments that the chain extender comprises a high proportion of the thiols and/or the aromatic diamines, ranging up to 100 percent for either one singly or for any combination thereof. Inclusion of either or both types of compounds at lower levels in the chain extender may also be selected. Use of the thiols as or in the chain extender, rather than in the isocyanate-reactive component, may help to avoid the problem of precipitation or instability that may be encountered when the thiols are combined directly with some other typical isocyanate-reactive compounds.

Additional formulation components may optionally be included, according to the desire of the practitioner. Such may include, in non-limiting embodiments, pigments and colorants; flame retardants; antioxidants; surface modifiers; bioretardant agents; ultraviolet light stabilizers; mold release agents; and combinations thereof.

To prepare the thermoset polyurethane elastomer compositions of the invention, and a portion of the isocyanate-reactive component and an excess (or all) of the isocyanate component are first reacted to form a prepolymer. Such prepolymer may be either a quasi-prepolymer or a true prepolymer. A quasi-prepolymer is formed when the stoichiometric ratio of isocyanate to hydroxyl or amine groups is much greater than 2:1. A true prepolymer is formed when the stoichiometric ratio is close to 2:1.

In order to expedite the elastomer-forming reaction, catalysts favoring both the urethane-forming and urea-forming reactions are desirably included in the formulation. While it is known that some catalysts may promote both reactions (so-called "balanced" catalysts), such are conventionally differentiated by their tendency to favor either the urea reaction or the urethane reaction.

Examples of suitable catalysts that may tend to favor the urea reaction may include bis-(2-dimethylaminoethyl)ether; tris(dialkylaminoalkyl)-s-hexahydrotriazines, such as 1,3,5-tris(N,N-dimethylaminopropyl)-s-hexahydrotriazine; pentamethyldiethylenetriamine; tetraalkyl-ammonium hydroxides such as tetramethylammonium hydroxide; alkali

metal hydroxides such as sodium hydroxide; alkali metal alkoxides such as sodium methoxide and potassium isopropoxide; and alkali metal salts of long-chain fatty acids having from 10 to 20 carbon atoms and, in some embodiments, pendant hydroxyl groups. In one embodiment, a combination of bis(dimethylaminoethyl)ether and dipropylene glycol may be an effective blowing catalyst, for example, in a 70/30 weight percent ratio. Combinations of any of the above may also be selected.

Examples of suitable catalysts that may tend to favor the urethane reaction include, generally, amidines, tertiary amines, organometallic compounds, and combinations thereof. These may include, but are not limited to, amidines such as 1,8-diazabicyclo[5.4.0]undec-7-ene and 2,3-dimethyl-3,4,5,6-tetrahydropyrimidine, and tertiary amines such as triethylamine, tributylamine, dimethylbenzylamine, N-methyl-, N-ethyl-, and N-cyclohexylmorpholine, N,N,N',N'-tetramethylethylenediamine, N,N,N',N'-tetramethylbutanediamine and -hexanediamine, pentamethyldiethylenetriamine, tetramethyldiaminoethyl ether, bis(dimethylaminopropyl)urea, dimethylpiperazine, dimethylcyclohexylamine, 1,2-dimethyl-imidazole, 1-aza-bicyclo[3.3.0]octane, and, in some preferred embodiments, 1,4-diazabicyclo[2.2.2]octane. Alkanolamine compounds, such as triethanolamine, triisopropanolamine, N-methyl- and N-ethyldiethanolamine, and dimethylethanolamine, may also be selected. Combinations of any of the above may also be effectively employed.

Organometallic compounds may include organotin compounds, such as tin(II) salts of organic carboxylic acids, e.g., tin(II) diacetate, tin(II) dioctanoate, tin(II) diethylhexanoate, and tin(II) dilaurate, and dialkyltin(IV) salts of organic carboxylic acids, e.g., dibutyltin diacetate, dibutyltin dilaurate, dibutyltin maleate and dioctyltin diacetate. Bismuth salts of organic carboxylic acids may also be selected, such as, for example, bismuth octanoate.

The organometallic compounds may be selected for use alone or in combinations, or, in some embodiments, in combination with one or more of the highly basic amines listed hereinabove. In one particular embodiment, the combined amount of the urethane-favoring and urea-favoring catalysts is greater than 1.7 percent, based on the weight of the polyol system.

The formulation components may be combined and introduced into a mold or cavity in any way known in the art to produce a polyurethane, polyurethane-urea, polyurea, or sulfur-containing urethane elastomer. In particularly preferred embodiments, a portion of the isocyanate-reactive component is first combined, in part, with an excess of isocyanate component to form the isocyanate-terminated prepolymer, while the remainder of the isocyanate-reactive component is combined with the chain extender, any optional catalysts, crosslink agents, surfactants, and/or any additional additives to form a "B" side (in Europe, the "A" side), and this "B" side is then quickly contacted with the "A" side (in Europe, the "B" side), which is in this embodiment now a prepolymer, in order to begin the polymerization reactions. In another embodiment, all materials except for the chain extender may be combined in the isocyanate-reactive component, and then the chain extender added at the same time as the prepolymer. In still another embodiment, a portion of the isocyanate component may be incorporated into an isocyanate-reactive prepolymer while the remainder of the isocyanate component is reacted thereafter with the remainder of the formulation. For example, just the 1,4-bis(isocyanato-methyl)cyclohexane may be incorporated into the prepolymer, while the 1,3-bis(iso-cyanatomethyl)cyclohexane is included with the remainder of the formulation thereafter.

Those skilled in the art will be aware of various types of equipment to accomplish the contact between reactive compounds while ensuring that an adequate level of mixing occurs to ensure uniformity of the final polyurethane composition as defined. One way to do this is to use a mixing injection head, wherein prepolymer and the chain extender are combined and mixed and then, more or less simultaneously, injected into the mold or cavity to be filled. The mold or cavity is filled from a single injection point while simultaneously drawing a vacuum from another point, is particularly desirable. The vacuum may maximize mold- or cavity-filling prior to gelling of the formulations, which in particular embodiments may be less than 3 minutes, and in other embodiments may be less than 1 minute. Desirably a reduced atmospheric pressure of from 350 to 850 millibar (mbar) (35 to 85 kilopascals (kPa)) may be employed, and more desirably from 400 to 800 mbar (50 to 80 kPa). (Atmospheric pressure is approximately 1013.25 mbar, or 101.325 kPa.) Further descriptions of a suitable reduced atmospheric pressure environment may be found in WO 2007/058793 A1; U.S. Patent 5,972,260; WO 2006/013004 A1; WO 2006/013002 A1; and WO 2000/047384 A2. Compression molding may also be employed.

Where a mold is used, demolding may be carried out using standard methodologies, and where desirable, suitable external and/or internal mold release agents may be employed. Total demold time may be less than 60 minutes, and in preferred embodiments less than 25 minutes, and in more preferred embodiments less than 15 minutes. This particularly short demold time reduces total cycle time and, therefore, cost of preparing these compositions, particularly when compared to the time required to make, for example, $H^{12}$MDI-based polyurethane optical lenses.

The formulation and process of the invention may be used to produce polyurethane composition elastomer articles having a density of from 0.90 to 1.50 kilograms per cubic meter (kg/$m^3$); in certain embodiments the density is from 0.90 to 1.35 kg/$m^3$; and in other embodiments it is from 0.90 to 1.20 kg/$m^3$. Density is measured according to ASTM 1622-88. In some embodiments these articles may have an impact resistance, as measured according to ASTM D256-06A, that is at least 50 kilojoules per square meter (kJ/$m^2$) (15 foot-pounds per inch (ft-lb/in)). Shore D Hardness is measured according to ASTM D2240. In other embodiments these articles may have a total luminous transmittance,

as measured according to ASTM D1003-07, of at least 90 percent. In particular embodiments these articles may have a refractive index that is at least 1.50, and preferably at least 1.53, measured according to ASTM D542. In particular embodiments these articles may have an Abbé number that is preferably at least 25, more preferably at least 35, and most preferably at least 45, as calculated based on refractive index measured according to ASTM D542. In some embodiments combinations or some or all of these properties may be obtained. As such, the polymers may be useful in a number of applications, such as, but not limited to, architectural glazings, vehicle glazings, riot shields, aircraft canopies, face masks, visors, ophthalmic and sunglass lenses, optical lenses, protective eyewear, and transparent armor.

EXAMPLES

Materials used in Examples 1 and 2 and Comparative Examples A-D may include:

Isocyanate 1: 4,4'-methylene-bis(cyclohexyl) isocyanate, known as $H^{12}$ MDI or DESMODUR™ W. DESMODUR™ is a tradename of Bayer A.G.
Isocyanate 2: A 50/50 mixture of 1,3-bis(isocyanatomethyl)cyclohexane and 1,4-bis(iso-cyanato-methyl)cyclohexane.
TONE™ 32B8: Polycaprolactone diol, 400 mw. TONE™ is a tradename of The Dow Chemical Company.
TONE™ 32C8: Polycaprolactone diol, 750 mw.
TONE™ 1278: Polycaprolactone diol, 3940 mw.
Di(2-hydroxyethyl) disulfide: Chevron Phillips Chemical Company LP, mw 154.
ETHACURE™ 100 LC: Diethyltoluenediamine. ETHACURE™ is a trademark of Albemarle Corporation.
LONZACURE™ MCDEA: 4,4'-methylenebis(3-chloro-2,6-dithylaniline). LONZACURE™ is a tradename of Air Products and Chemicals, Inc.

Example 1.

The following are combined, melted and mixed well: 36.05 grams (g) of TONE™ 32B8, 6.83 g of TONE™ 32C8, 10.63 g of TONE™ 1278, and 0.58 g of trimethylolpropane. The mixture is then added slowing to 3-neck glass flask containing 45.90 g of Isocyanate 2 with agitation. The temperature of the reactor is then slowly raised to 90 degrees Celsius (°C) and the reaction is kept at 90°C in a dry nitrogen atmosphere for 6 hours. At the end of that time, the reaction product is a prepolymer having an NCO content of 10.75 percent.
The prepolymer reaction product is then degassed and cooled to 65°C to 70°C, and 100 g are mixed with 21.62 g of ETHACURE™ 100 LC on a speed mixer for 30 seconds and poured into a mold that has been preheated at 115°C. This forms sample sheets that are 3 mm in thickness. The mold is then placed in an oven set at 115°C. Following cure at 115°C for 10 minutes, the sample sheet is removed from the mold and postcured at 115°C for an additional 16 hours.
The sample sheet is then kept at room temperature for 7 to 10 days before it is subjected to tests for haze and luminous transmittance (ASTM D1003-07) and impact resistance (ASTM D256-06A). Results of the testing are summarized in Table 1.

Example 2

An additional 100 g of the prepolymer prepared in Example 1 is mixed with 45.45 g of LONZACURE™ MCDEA, melted at 100°C on a speed mixer for 30 seconds, and poured into a mold that has been preheated at 130°C. This forms sheets having a thickness of 3 mm. The mold is then placed in an oven set at 130°C. Following cure at 130°C for 30 minutes, the sample sheet is removed from the mold and postcured at 130°C for an additional 16 hours.
The sample sheet is then kept at room temperature for 7 to 10 days before it is subjected to tests for haze, luminous transmittance and impact resistance. The results are shown in Table 1.

Comparative Example A

A combination of 12.37 g of TONE™ 32B8, 41.52 g of TONE™ 1278 and 0.24 g of trimethylolpropane is melted at 65°C and mixed well before being added slowly to a 3-neck glass flask containing 45.87 g of Isocyanate 1 while agitating. The temperature of the reactor is then slowly raised to 90°C and the reaction is kept at 90°C in a dry nitrogen atmosphere for 6 hours. At the end of the reaction, the prepolymer reaction product has an NCO content of 11.0 percent.
After the reaction the prepolymer product is degassed and cooled to 65°C to 70°C, and 100 g of it is then mixed with 22.13 g of ETHACURE™ 100 LC on a speed mixer for 60 seconds and poured into a mold that has been preheated at 115°C. This forms sample sheets having a thickness of 3 mm. The mold is then placed in an oven set at 115°C for an additional 16 hours.

The sample sheet is then kept at room temperature for 7 to 10 days before it is subjected to tests for haze and luminous transmittance as well as impact resistance. Results are shown in Table 1.

Comparative Example B

An additional 100 g of the prepolymer prepared in Comparative Example A is mixed with 45.67 g of LONZACURE™ MCDEA on a speed mixer for 60 seconds and then poured into a mold that has been preheated at 130°C to form a 3 mm thick sample sheet. Following curing at 130°C for 120 minutes, the sample sheet is removed from the mold and placed in an oven set at 130°C for an additional 48 hours.

The sample is then kept at room temperature for 7 to 10 days before it is subjected to tests for haze and luminous transmittance as well as impact resistance. Results are shown in Table 1.

Comparative Example C

An additional 100 g of the prepolymer prepared in Comparative Example A is mixed with 22.13 g of ETHACURE™ 100 LC on a speed mixer for 60 seconds, and then poured into a mold preheated at 115°C to form a 3 mm thickness sample sheet. Following curing at 115°C for 10 minutes, the sample sheet is removed from the mold. However, the sheet breaks into several pieces during demold due to lack of strength. As a result, tests on the samples cannot be performed.

Comparative Example D

An additional 100 g of the prepolymer prepared in Comparative Example A is mixed with 45.67 g of LONZACURE™ MCDEA on a speed mixer for 60 seconds, and then poured into a mold preheated at 130°C to form a 3 mm thickness sample sheet. Following curing at 130°C for 30 minutes, the sample sheet is removed from the mold. However, the sheet breaks into several pieces during demold due to lack of strength. As a result, tests on the sample cannot be performed.

Table 1

| Example | Haze (%) | Total Luminous Transmittance (%) | Diffuse Transmittanc e (%) | Hardness Shore D | Impact Resistance (ft-lb/in) |
|---|---|---|---|---|---|
| Example 1 | 16.14 | 92.71 | 14.96 | 70 | 17.70 |
| Example 2 | 14.68 | 91.44 | 13.42 | 74 | 20.00 |
| Comparative Example A | 13.34 | 90.44 | 12.08 | 65 | 12.80 |
| Comparative Example B | 16.14 | 89.98 | 18.85 | 70 | 8.40 |

Examples 3 and 4, and Comparative Examples E and F

Specimen Preparation

Specimens of approximately 9 millimeters (mm) by 30 mm are cut from the resulting 3 mm thick plaques. All specimens are prepared according to guidelines of the testing methods.

Specimens for refractive index are subjected to polishing via several grades of sandpaper and then fine paper, to a grit level of 1200. The polished samples are tested on an Atago DR M2/1550 Abbé refractometer for the refractive index at 20°C and at a variety of wavelengths. The data are fitted to the Cauchy formula using a "least squares method," and the fitted equation is then used to determine the refractive index of each material at 656.3 nanometers (nm). The Abbé number for each material is then calculated according to the equation:

$$AbbeNumber = \frac{n_D - 1}{n_F - n_C}$$

where $n_D$ is the refractive index at 589 nm, $n_C$ is the refractive index at 656.3 nm, and $n_F$ is the refractive index at

486nm.

The original plaques are rested for scratch resistance using a Texas A&M University Scratch Tester with increasing force from 1 newton (N) to 50 N over a 100 millimeter (mm) distance at a rate of 100 millimeters per second (mm/s) (ASTM 2707-05).

Example 3

For this example, 26.44 g of TONE™ 32B8, 8.87 g of TONE™ 32C8, 8.09 g of TONE™ 1278 and 0.22 g of trimethylolpropane are melted at 65°C and mixed well before slowly adding to a 3-neck glass flask containing 37.60 g of Isocyanate 2 under nitrogen protection while stirring. The temperature of the reactor is then raised slowly to approximately 90°C. The reaction is kept at 90°C in a dry nitrogen atmosphere for 6 hours. At the end of the reaction, the reaction product has an NCO content of 11.5 percent.

After the reaction, the product is degassed and cooled to approximately 65 to 70 °C. The prepolymer is then mixed with 18.79 g of ETHACURE™ 100 LC on a speed mixer for 30 seconds, and poured into a mold preheated at 115°C. After 10 minutes, the sample sheet is removed from the mold and postcured at 115°C for an additional 16 hours.

The sample sheet is then kept at room temperature for 7 to 10 days before being subjected to tests for scratch resistance (ASTM 2707-05, with a scratch length of 100 mm, a scratch speed of 100 mm/s and a linear increasing load of 1 N to 50 N), refractive index (ASTM D542) and impact resistance (ASTM D256-06A). Results of the tests are summarized in Table 2.

Example 4

For this example, 17.14 g of TONE™ 32B8, 13.35 g of TONE™ 32C8, 6.91 g of di(2-hydroxyethyl)disulfide, 13.26 g of TONE™ 1278 and 0.30 g of trimethylolpropane are melted at 65°C and mixed well before slowly adding to a 3-neck glass flask containing 49.03 g of Isocyanate 2 under nitrogen protection while stirring. The temperature of the reactor is then raised slowly to approximately 90°C. The reaction is kept at 90°C in a dry nitrogen atmosphere for 6 hours. At the end of the reaction, the reaction product has an NCO content of 11.5 percent.

After the reaction, the product is degassed and cooled to approximately 65 to 70°C. The prepolymer is then mixed with 18.79 g of ETHACURE™ 100 LC on a speed mixer for 30 seconds, and poured into a mold preheated at 115°C. After 10 minutes, the sample sheet is removed from the mold and postcured at 115°C for an additional 16 hours.

The sample sheet is then kept at room temperature for 7-10 days before being subjected to refractive index testing (ASTM D542), and the refractive index is found to be 1.546.

Comparative Example E

In this case, 21.10 g of TONE™ 32B8, 6.46 g of TONE™ 1278, 7.07 g of TONE™ 32C8, and 0.18 g of trimethylolpropane are melted at 65°C and mixed well before slowly adding to a 3-neck flask containing 46.40 g of Isocyanate 1 under nitrogen protection, while stirring. The temperature of the reactor is then raised slowly to approximately 90°C. The reaction is kept at 90°C in a dry nitrogen atmosphere for 6 hours. At the end of the reaction, the reaction product has an NCO content of 11.5 percent.

After the reaction, the product is degassed and cooled to approximately 65°C to 70°C. The prepolymer is then mixed with 18.79 g of ETHACURE™ 100 LC on a speed mixer for 60 seconds and poured into a mold preheated at 115°C to form sample sheets of approximately 3 mm thickness. The mold is then placed in an oven set at 115°C. After curing at 115°C for approximately 60 minutes, the sample sheet is removed from the mold and postcured at 115°C for an additional 16 hours. Efforts to de-mold the sample in less than 60 minutes caused cracking of the specimen.

The sample sheet is then kept at room temperature for 7 to 10 days before being subjected to tests for scratch resistance (ASTM 2707-05, with a scratch length of 100 mm, a scratch speed of 100 mm/s and a linear increasing load of 1 N to 50 N), refractive index (ASTM D542) and impact resistance (ASTM D256-06A). Results are summarized in Table 2.

Comparative Example F

A polycarbonate material, CALIBRE™ 300-10 (CALIBRE™ is a tradename of The Dow Chemical Company), is compression molded at 250°C into a plaque of 3 mm thickness and tested alongside the polyurethane thermoset of Example 3 for optical properties. Density and impact resistance are taken from the technical datasheets and are determined according to the same methods as above on injection-molded plaques.

Table 2

| Sample | Comparative Example E | Example 3 | Comparative Example F |
|---|---|---|---|
| [1]nD | 1.53 | 1.53 | 1.58 |
| [2]Abbé Number | 48 | 47 | 31 |
| Impact resistance, kJ/m$^2$ | 11.75 | 91.9 | 90.0 |
| [3]Density, g/cm$^3$ | 1.13 | 1.11 | 1.20 |
| Gel time, minutes | 1-2 | <1 | Not Applicable |
| Demold time, minutes | 60 | 10 | Not Applicable |

[1]nD is the refractive index.
[2]Abbé number, also known as the V-number or constringence of a transparent material, is a measure of the material's dispersion (variation of refractive index with wavelength) in relation to its refractive index.
[3]grams per cubic centimeter.

## Claims

**1.** A thermoset polyurethane composition comprising the reaction product of at least a prepolymer and a chain extender; wherein the prepolymer has an NCO content of from 8 to 15 percent by weight and comprises the reaction product of

(i) an isocyanate component including 1,4-bis(isocyanatomethyl)-cyclohexane and 1,3-bis(isocyanatomethyl)cyclohexane, wherein the 1,4-bis(isocyanatomethyl)cyclohexane is present in an amount of at least 20 percent by weight of the isocyanate component; and
(ii) an isocyanate-reactive component comprising

(a) at least one first isocyanate-reactive compound having a molecular weight from 150 Daltons to less than 950 Daltons, and
(b) at least one second isocyanate-reactive compound having a molecular weight of from 2,000 Daltons to 4,500 Daltons;
wherein the first and second isocyanate-reactive compounds each contain at least one functional group selected from a hydroxyl group, a thiol group, or an amine group, or a combination thereof; and
wherein the first isocyanate-reactive compound comprises from 70 to 95 weight percent of the isocyanate-reactive component; and
wherein the second isocyanate-reactive compound comprises from 5 to 30 weight percent of the isocyanate-reactive component;

and wherein the chain extender is selected from one or more aromatic, aliphatic, and cycloaliphatic compounds containing at least one functional group selected from a hydroxyl group, an amine group, a thiol 1 group, or a combination thereof.

**2.** The composition of Claim 1, wherein the isocyanate component contains terminal isocyanate groups and the isocyanate-reactive component contains terminal isocyanate-reactive groups, and wherein the ratio of the terminal isocyanate groups to the terminal isocyanate-reactive groups ranges from 1.8:1 to 3.5:1.

**3.** The composition of Claim 1, wherein the isocyanate-reactive component comprises at least two compounds selected from polyether polyols, polyester polyols, polyether-ester polyols, polythio-ether polyols, polycaprolactones, polycarbonates, polyether amines, polyester amines, polycarbonate amines, polycaprolactone amines, copolymers thereof, and combinations thereof.

**4.** The composition of Claim 1, wherein the isocyanate-reactive component comprises at least 3 percent by weight, based on total isocyanate-reactive component, of cyclobutanediol, a thiol group-containing compound, or a combination thereof.

**5.** The composition of Claim 4 wherein the thiol group-containing compound is selected from monothioglycerol, dithioglycerol, trithioglycerol, dimercaptopropanol, 1-mercaptomethyl-1,1-dihydroxymethylpropane, 1,4-dimercapto-2,3-hydroxybutane, tetrakis(mercaptomethyl)methane, 1,1,1 -tris(mer-captomethyl)ethane, 1,1,1-tris(mercaptomethyl)propane, 2,5-dimercaptomethyl-1,4-dithiane, 2,5-dimercaptomethyl-2,5-dimethyl-1,4-dithiane, 2,5-dimercaptothiophen, 2,5-dimercaptomethylthiophen, di(2-hydroxy-ethyl)disulfide, polyether polysulfide, polyester polysulfide, or a combination thereof.

**6.** The composition of Claim 1, wherein the chain extender comprises an aromatic diamine, a thiol-group containing compound, or a combination thereof.

**7.** The composition of Claim 1 or 6, wherein the polyurethane composition is molded to form an article having at least one property selected from a total luminous transmittance, as measured according to ASTM D1003-07, of at least 90 percent; an impact resistance, as measured according to ASTM D256-06A, of at least 50 kJ/$m^2$; a refractive index, as measured according to ASTM D542, of at least 1.50; or an Abbé number, as calculated based on refractive index measured according to ASTM D542, of at least 25.

**8.** The composition of Claim 7, wherein the article is an architectural glazing, a vehicle glazing, a riot shield, an aircraft canopy, a face mask, a visor, an ophthalmic lens, a sunglass lens, an optical lens, protective eyewear, or transparent armor.

**9.** The composition of Claim 8 wherein the article is an ophthalmic lens.

**10.** A process for preparing a thermoset polyurethane composition comprising forming a prepolymer having an NCO content of from 8 to 15 percent by weight by contacting, under reaction conditions:

(i) an isocyanate component including 1,4-bis(isocyanatomethyl)cyclohexane and 1,3-bis(isocyanatomethyl)cyclohexane, wherein the 1,4-bis(isocyanatomethyl)-cyclohexane is present in an amount of at least 20 percent by weight of the isocyanate component; and
(ii) an isocyanate-reactive component comprising

(c) at least one first isocyanate-reactive compound having a molecular weight from 150 Daltons to less than 950 Daltons, and
(d) at least one second isocyanate-reactive compound having a molecular weight of from 2,000 Daltons to 4,500 Daltons;
wherein the first and second isocyanate-reactive compounds each contain at least one functional group selected from a hydroxyl group, a thiol group, or an amine group, or a combination thereof, and
wherein the first isocyanate-reactive compound comprises from 70 to 95 weight percent of the isocyanate-reactive component; and
wherein the second isocyanate-reactive compound comprises from 5 to 30 weight percent of the isocyanate-reactive component;

such that a prepolymer is formed;
and contacting with the prepolymer, under reaction conditions,

a chain extender selected from one or more aromatic, aliphatic, and cycloaliphatic compounds containing at least one functional group each, the functional group being selected from a hydroxyl group, an amine group, a thiol group, or a combination thereof;
such that a thermoset polyurethane composition is formed.

**11.** The process of Claim 10, wherein the isocyanate component contains terminal isocyanate groups and the isocyanate-reactive component contains terminal isocyanate-reactive groups, and wherein the ratio of the terminal isocyanate groups to the terminal isocyanate-reactive groups ranges from 1.8:1 1 to 3.5:1.

**12.** The process of Claim 10, wherein the thermoset polyurethane composition is molded to form an article having at least one property selected from a total luminous transmittance, as measured according to ASTM D1003-07, of at least 90 percent; an impact resistance, as measured according to ASTM D256-06A, of at least 50 kJ/$m^2$; a refractive index, as measured according to ASTM D542, of at least 1.50; or an Abbé number, as calculated based on refractive index measured according to ASTM D542, of at least 25.

**13.** The process of Claim 10 or 12, wherein the article is able to be removed from the mold in less than 25 minutes.

**14.** The process of Claim 12 wherein the article is an architectural glazing, a vehicle glazing, a riot shield, an aircraft canopy, a face mask, a visor, an ophthalmic lens, a sunglass lens, an optical lens, protective eyewear, or transparent armor.

**15.** The process of Claim 14 wherein the article is an ophthalmic lens.

## Patentansprüche

**1.** Eine Duroplast-Polyurethanzusammensetzung, die das Reaktionsprodukt von mindestens einem Vorpolymer und einem Kettenverlängerer beinhaltet;
wobei das Vorpolymer einen NCO-Gehalt von 8 bis 15 Gewichtsprozent aufweist und das Reaktionsprodukt von Folgendem beinhaltet:

(i) einer Isocyanatkomponente, die 1,4-Bis(isocyanatmethyl)-cyclohexan und 1,3-Bis(isocyanatmethyl)-cyclohexan umfasst, wobei das 1,4-Bis(isocyanatmethyl)cyclohexan in einer Menge von mindestens 20 Gewichtsprozent der Isocyanatkomponente vorliegt; und
(ii) einer Isocyanat-reaktionsfähigen Komponente, die Folgendes beinhaltet:

(a) mindestens eine erste Isocyanat-reaktionsfähige Verbindung mit einem Molekulargewicht von 150 Dalton bis weniger als 950 Dalton und
(b) mindestens eine zweite Isocyanat-reaktionsfähige Verbindung mit einem Molekulargewicht von 2000 Dalton bis 4500 Dalton;
wobei die ersten und zweiten Isocyanat-reaktionsfähigen Verbindungen jeweils mindestens eine funktionelle Gruppe enthalten, die ausgewählt ist aus einer Hydroxylgruppe, einer Thiolgruppe oder einer Amingruppe oder einer Kombination davon; und
wobei die erste Isocyanat-reaktionsfähige Verbindung 70 bis 95 Gewichtsprozent der Isocyanat-reaktionsfähigen Komponente ausmacht; und
wobei die zweite Isocyanat-reaktionsfähige Verbindung 5 bis 30 Gewichtsprozent der Isocyanat-reaktionsfähigen Komponente ausmacht;

und wobei der Kettenverlängerer ausgewählt ist aus einer oder mehreren aromatischen, aliphatischen und cycloaliphatischen Verbindungen, die mindestens eine funktionelle Gruppe enthalten, die ausgewählt ist aus einer Hydroxylgruppe, einer Amingruppe, einer Thiolgruppe oder einer Kombination davon.

**2.** Zusammensetzung gemäß Anspruch 1, wobei die Isocyanat-Komponente endständige Isocyanatgruppen enthält und die Isocyanat-reaktionsfähige Komponente endständige Isocyanat-reaktionsfähige Gruppen enthält, und wobei das Verhältnis der endständigen Isocyanatgruppen zu den endständigen Isocyanat-reaktionsfähigen Gruppen im Bereich von 1,8:1 bis 3,5:1 liegt.

**3.** Zusammensetzung gemäß Anspruch 1, wobei die Isocyanat-reaktionsfähige Komponente mindestens zwei Verbindungen beinhaltet, die ausgewählt sind aus Polyetherpolyolen, Polyesterpolyolen, Polyetheresterpolyolen, Polythioetherpolyolen, Polycaprolactonen, Polycarbonaten, Polyetheraminen, Polyesteraminen, Polycarbonataminen, Polycaprolactonaminen, Copolymeren davon und Kombinationen davon.

**4.** Zusammensetzung gemäß Anspruch 1, wobei die Isocyanat-reaktionsfähige Komponente mindestens 3 Gewichtsprozent, bezogen auf die Gesamtmenge an Isocyanat-reaktionsfähiger Komponente, Cyclobutandiol, einer eine Thiolgruppe enthaltenden Verbindung oder einer Kombination davon beinhaltet.

**5.** Zusammensetzung gemäß Anspruch 4, wobei die Thiolgruppe-enthaltende Verbindung ausgewählt ist aus Monothioglycerin, Dithioglycerin, Trithioglycerin, Dimercaptopropanol, 1-Mercaptomethyl-1,1-dihydroxymethylpropan, 1,4-Dimercapto-2,3-hydroxybutan, Tetrakis(mercaptomethyl)methan, 1,1,1-Tris(mercaptomethyl)ethan, 1,1,1-Tris(mercaptomethyl)propan, 2,5-Dimercaptomethyl-1,4-dithian, 2,5-Dimercaptomethyl-2,5-dimethyl-1,4-dithian, 2,5-Dimercaptothiophen, 2,5-Dimercaptomethylthiophen, Di(2-hydroxyethyl)disulfid, Polyetherpolysulfid, Polyesterpolysulfid oder einer Kombination davon.

**6.** Zusammensetzung gemäß Anspruch 1, wobei der Kettenverlängerer ein aromatisches Diamin, eine Thiolgruppe-enthaltende Verbindung oder eine Kombination davon beinhaltet.

**7.** Zusammensetzung gemäß Anspruch 1 oder 6, wobei die Polyurethanzusammensetzung ausgeformt ist, um einen Artikel mit mindestens einer Eigenschaft, ausgewählt aus einem Gesamtlichttransmissionsgrad, gemessen nach ASTM D1003-07, von mindestens 90 Prozent; einer Schlagfestigkeit, gemessen nach ASTM D256-06A, von mindestens 50 kJ/m$^2$; einem Brechungsindex, gemessen nach ASTM D542, von mindestens 1,50; oder einer Abbe-Zahl, berechnet anhand des Brechungsindexes, gemessen nach ASTM D542, von mindestens 25 zu bilden.

**8.** Zusammensetzung gemäß Anspruch 7, wobei der Artikel eine Architekturverglasung, eine Fahrzeugverglasung, ein Polizeischild, ein Flugzeug-Kabinendach, eine Schutzmaske, ein Visier, ein Brillenglas, ein Sonnenbrillenglas, eine optische Linse, eine Schutzbrille oder eine transparente Panzerung ist.

**9.** Zusammensetzung gemäß Anspruch 8, wobei der Artikel ein Brillenglas ist.

**10.** Ein Verfahren zum Herstellen einer Duroplast-Polyurethanzusammensetzung, beinhaltend das Bilden eines Vorpolymers mit einem NCO-Gehalt von 8 bis 15 Gewichtsprozent durch In-Kontakt-Bringen, unter Reaktionsbedingungen:

(i) einer Isocyanatkomponente, die 1,4-Bis(isocyanatmethyl)cyclohexan und 1,3-Bis(isocyanatmethyl)cyclohexan umfasst, wobei das 1,4-Bis(isocyanatmethyl)-cyclohexan in einer Menge von mindestens 20 Gewichtsprozent der Isocyanatkomponente vorliegt; und
(ii) einer Isocyanat-reaktionsfähigen Komponente, die Folgendes beinhaltet:

(c) mindestens eine erste Isocyanat-reaktionsfähige Verbindung mit einem Molekulargewicht von 150 Dalton bis weniger als 950 Dalton und
(d) mindestens eine zweite Isocyanat-reaktionsfähige Verbindung mit einem Molekulargewicht von 2000 Dalton bis 4500 Dalton;
wobei die ersten und zweiten Isocyanat-reaktionsfähigen Verbindungen jeweils mindestens eine funktionelle Gruppe enthalten, die ausgewählt ist aus einer Hydroxylgruppe, einer Thiolgruppe oder einer Amingruppe oder einer Kombination davon, und
wobei die erste Isocyanat-reaktionsfähige Verbindung 70 bis 95 Gewichtsprozent der Isocyanat-reaktionsfähigen Komponente ausmacht; und
wobei die zweite Isocyanat-reaktionsfähige Verbindung 5 bis 30 Gewichtsprozent der Isocyanat-reaktionsfähigen Komponente ausmacht;

so dass ein Vorpolymer gebildet wird;
und In-Kontakt-Bringen mit dem Vorpolymer, unter Reaktionsbedingungen, eines Kettenverlängerers, ausgewählt aus einer oder mehreren aromatischen, aliphatischen und cycloaliphatischen Verbindungen, die mindestens jeweils eine funktionelle Gruppe enthalten, wobei die funktionelle Gruppe ausgewählt ist aus einer Hydroxylgruppe, einer Amingruppe, einer Thiolgruppe oder einer Kombination davon;
so dass eine Duroplast-Polyurethanzusammensetzung gebildet wird.

**11.** Verfahren gemäß Anspruch 10, wobei die Isocyanat-Komponente endständige Isocyanatgruppen enthält und die Isocyanat-reaktionsfähige Komponente endständige Isocyanat-reaktionsfähige Gruppen enthält, und wobei das Verhältnis der endständigen Isocyanatgruppen zu den endständigen Isocyanat-reaktionsfähigen Gruppen im Bereich von 1,8:1 bis 3,5:1 liegt.

**12.** Verfahren gemäß Anspruch 10, wobei die Duroplast-Polyurethanzusammensetzung ausgeformt ist, um einen Artikel mit mindestens einer Eigenschaft, ausgewählt aus einem Gesamtlichttransmissionsgrad, gemessen nach ASTM D1003-07, von mindestens 90 Prozent; einer Schlagfestigkeit, gemessen nach ASTM D256-06A, von mindestens 50 kJ/m$^2$; einem Brechungsindex, gemessen nach ASTM D542, von mindestens 1,50; oder einer Abbe-Zahl, berechnet anhand des Brechungsindexes, gemessen nach ASTM D542, von mindestens 25 zu bilden.

**13.** Verfahren gemäß Anspruch 10 oder 12, wobei der Artikel innerhalb von weniger als 25 Minuten aus dem Formkörper entfernt werden kann.

**14.** Verfahren gemäß Anspruch 12, wobei der Artikel eine Architekturverglasung, eine Fahrzeugverglasung, ein Polizeischild, ein Flugzeug-Kabinendach, eine Schutzmaske, ein Visier, ein Brillenglas, ein Sonnenbrillenglas, eine optische Linse, eine Schutzbrille oder eine transparente Panzerung ist.

**15.** Verfahren gemäß Anspruch 14, wobei der Artikel ein Brillenglas ist.

**Revendications**

**1.** Une composition de polyuréthane thermodurci comprenant le produit de la réaction d'au moins un prépolymère et un allongeur de chaîne;
dans laquelle le prépolymère a une teneur en NCO allant de 8 à 15 pour cent en poids et comprend le produit de la réaction de

(i) un constituant isocyanate incluant du 1,4-bis(isocyanatométhyl)-cyclohexane et du 1,3-bis(isocyanatométhyl)cyclohexane, le 1,4-bis(isocyanatométhyl)cyclohexane étant présent dans une quantité d'au moins 20 pour cent en poids du constituant isocyanate ; et
(ii) un constituant réactif aux isocyanates comprenant

(a) au moins un premier composé réactif aux isocyanates ayant une masse moléculaire allant de 150 Daltons à moins de 950 Daltons, et
(b) au moins un deuxième composé réactif aux isocyanates ayant une masse moléculaire allant de 2 000 Daltons à 4 500 Daltons ;
le premier et le deuxième composés réactifs aux isocyanates contenant chacun au moins un groupe fonctionnel sélectionné parmi un groupe hydroxyle, un groupe thiol, ou un groupe amine, ou une combinaison de ceux-ci ; et
le premier composé réactif aux isocyanates représentant de 70 à 95 pour cent en poids du constituant réactif aux isocyanates ; et
le deuxième composé réactif aux isocyanates représentant de 5 à 30 pour cent en poids du constituant réactif aux isocyanates ;

et dans laquelle l'allongeur de chaîne est sélectionné parmi un ou plusieurs composés aromatiques, aliphatiques, et cycloaliphatiques qui contiennent au moins un groupe fonctionnel sélectionné parmi un groupe hydroxyle, un groupe amine, un groupe thiol, ou une combinaison de ceux-ci.

**2.** La composition de la revendication 1, dans laquelle le constituant isocyanate contient des groupes isocyanate terminaux et le constituant réactif aux isocyanates contient des groupes réactifs aux isocyanates terminaux, et dans laquelle le rapport des groupes isocyanate terminaux aux groupes réactifs aux isocyanates terminaux est compris dans la gamme allant de 1,8/1 à 3,5/1.

**3.** La composition de la revendication 1, dans laquelle le constituant réactif aux isocyanates comprend au moins deux composés sélectionnés parmi des polyols de polyéther, des polyols de polyester, des polyols de polyéther-ester, des polyols de polythio-éther, des polycaprolactones, des polycarbonates, des amines de polyéther, des amines de polyester, des amines de polycarbonate, des amines de polycaprolactone, des copolymères de ceux-ci, et des combinaisons de ceux-ci.

**4.** La composition de la revendication 1, dans laquelle le constituant réactif aux isocyanates comprend au moins 3 pour cent en poids, sur la base du constituant réactif aux isocyanates total, de cyclobutane diol, d'un composé contenant un groupe thiol, ou d'une combinaison de ceux-ci.

**5.** La composition de la revendication 4 dans laquelle le composé contenant un groupe thiol est sélectionné parmi le monothioglycérol, le dithioglycérol, le trithioglycérol, le dimercaptopropanol, le 1-mercaptométhyl-1,1-dihydroxyméthylpropane, le 1,4-dimercapto-2,3-hydroxybutane, le tétrakis(mercaptométhyl)méthane, le 1,1,1-tris(mer-captométhyl)éthane, le 1,1,1-tris(mercaptométhyl)propane, le 2,5-dimercaptométhyl-1,4-dithiane, le 2,5-dimercaptométhyl-2,5-diméthyl-1,4-dithiane, le 2,5-dimercaptothiophène, le 2,5-dimercaptométhylthiophène, le disulfure de di(2-hydroxy-éthyle), le polysulfure de polyéther, le polysulfure de polyester, ou une combinaison de ceux-ci.

**6.** La composition de la revendication 1, dans laquelle l'allongeur de chaîne comprend une diamine aromatique, un composé contenant un groupe thiol, ou une combinaison de ceux-ci.

**7.** La composition de la revendication 1 ou de la revendication 6, dans laquelle la composition de polyuréthane est moulée pour former un article ayant au moins une propriété sélectionnée parmi un facteur de transmission dans le visible total, tel que mesuré selon l'ASTM D1003-07, d'au moins 90 pour cent ; une résistance au choc, telle que mesurée selon l'ASTM D256-06A, d'au moins 50 kJ/$m^2$ ; un indice de réfraction, tel que mesuré selon l'ASTM D542, d'au moins 1,50 ; ou un nombre d'Abbe, tel que calculé sur la base d'un indice de réfraction mesuré selon l'ASTM D542, d'au moins 25.

**8.** La composition de la revendication 7, dans laquelle l'article est un vitrage architectural, un vitrage automobile, un bouclier anti-émeute, une verrière d'avion, un masque facial, une visière, un verre ophtalmique, un verre de lunettes de soleil, un verre d'optique, des lunettes de protection, ou une armure transparente.

**9.** La composition de la revendication 8 dans laquelle l'article est un verre ophtalmique.

**10.** Un procédé pour préparer une composition de polyuréthane thermodurci comprenant la formation d'un prépolymère ayant une teneur en NCO allant de 8 à 15 pour cent en poids en mettant en contact, dans des conditions de réaction :

(i) un constituant isocyanate incluant du 1,4-bis(isocyanatométhyl)cyclohexane et du 1,3-bis(isocyanatométhyl)cyclohexane, le 1,4-bis(isocyanatométhyl)-cyclohexane étant présent dans une quantité d'au moins 20 pour cent en poids du constituant isocyanate ; et
(ii) un constituant réactif aux isocyanates comprenant

(c) au moins un premier composé réactif aux isocyanates ayant une masse moléculaire allant de 150 Daltons à moins de 950 Daltons, et
(d) au moins un deuxième composé réactif aux isocyanates ayant une masse moléculaire allant de 2 000 Daltons à 4 500 Daltons ;
le premier et le deuxième composés réactifs aux isocyanates contenant chacun au moins un groupe fonctionnel sélectionné parmi un groupe hydroxyle, un groupe thiol, ou un groupe amine, ou une combinaison de ceux-ci, et
le premier composé réactif aux isocyanates représentant de 70 à 95 pour cent en poids du constituant réactif aux isocyanates ; et
le deuxième composé réactif aux isocyanates représentant de 5 à 30 pour cent en poids du constituant réactif aux isocyanates ;

de sorte qu'un prépolymère soit formé ;
et la mise en contact avec le prépolymère, dans des conditions de réaction, d'un allongeur de chaîne sélectionné parmi un ou plusieurs composés aromatiques, aliphatiques, et cycloaliphatiques qui contiennent au moins un groupe fonctionnel chacun, le groupe fonctionnel étant sélectionné parmi un groupe hydroxyle, un groupe amine, un groupe thiol, ou une combinaison de ceux-ci ;
de sorte qu'une composition de polyuréthane thermodurci soit formée.

**11.** Le procédé de la revendication 10, dans lequel le constituant isocyanate contient des groupes isocyanate terminaux et le constituant réactif aux isocyanates contient des groupes réactifs aux isocyanates terminaux, et dans lequel le rapport des groupes isocyanate terminaux aux groupes réactifs aux isocyanates terminaux est compris dans la gamme allant de 1,8/1 à 3,5/1.

**12.** Le procédé de la revendication 10, dans lequel la composition de polyuréthane thermodurci est moulée pour former un article ayant au moins une propriété sélectionnée parmi un facteur de transmission dans le visible total, tel que mesuré selon l'ASTM D1003-07, d'au moins 90 pour cent ; une résistance au choc, telle que mesurée selon l'ASTM D256-06A, d'au moins 50 kJ/$m^2$ ; un indice de réfraction, tel que mesuré selon l'ASTM D542, d'au moins 1,50 ; ou un nombre d'Abbe, tel que calculé sur la base d'un indice de réfraction mesuré selon l'ASTM D542, d'au moins 25.

**13.** Le procédé de la revendication 10 ou la revendication 12, dans lequel l'article peut être retiré du moule en moins de 25 minutes.

**14.** Le procédé de la revendication 12 dans lequel l'article est un vitrage architectural, un vitrage automobile, un bouclier anti-émeute, une verrière d'avion, un masque facial, une visière, un verre ophtalmique, un verre de lunettes de soleil, un verre d'optique, des lunettes de protection, ou une armure transparente.

**15.** Le procédé de la revendication 14 dans lequel l'article est un verre ophtalmique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20060058453 A
- WO 2004041899 A
- DD 290201 A
- DD 290202 A
- DE 3412082 A
- DE 4232970 A
- GB 2187449 A
- EP 0116308 A
- EP 0116310 A
- US 4631298 A
- WO 2007058793 A1
- US 5972260 A
- WO 2006013004 A1
- WO 2006013002 A1
- WO 2000047384 A2


### Non-patent literature cited in the description


- Urethane Polymers. **ULRICH, H.** Kirk-Othmer Encyclopedia of Chemical Technology. John Wiley & Sons, Inc, 2006
- Polyethers, Propylene Oxide Polymers. **GAGNON.** Kirk-Othmer Encyclopedia of Chemical Technology. John Wiley & Sons, Inc, 1996
- **PRUCKMAYR, G. et al.** Polyethers, Tetrahydrofuran and Oxetane Polymers. *Kirk-Othmer Encyclopedia of Chemical Technology,* 1996